Europäisches Patentamt

European Patent Office

Office européen des brevets

(19)

(11) Numéro de publication: **0 241 352**
**A1**

(12) ## DEMANDE DE BREVET EUROPEEN

(21) Numéro de dépôt: **87400707.3**

(22) Date de dépôt: **31.03.87**

(51) Int. Cl.⁴: **G 06 F 15/332**

(30) Priorité: **04.04.86 FR 8604845**

(43) Date de publication de la demande:
**14.10.87 Bulletin 87/42**

(84) Etats contractants désignés: **DE GB IT NL**

(71) Demandeur: **Jutand, Francis**
**167, rue Etienne Dolet**
**F-94230 Cachan (FR)**

**Demassieux, Nicolas**
**4, Impasse Reille**
**F-75014 Paris (FR)**

Dana, Michel
53, rue de la Colonie
F-75013 Paris (FR)

(72) Inventeur: **Jutand, Francis**
**167, rue Etienne Dolet**
**F-94230 Cachan (FR)**

**Demassieux, Nicolas**
**4, Impasse Reille**
**F-75014 Paris (FR)**

**Dana, Michel**
**53, rue de la Colonie**
**F-75013 Paris (FR)**

(74) Mandataire: **Mongrédien, André et al**
**c/o BREVATOME 25, rue de Ponthieu**
**F-75008 Paris (FR)**

(54) Circuit pour effectuer une transformation linéaire sur un signal numérique.

(57) Circuit pour effectuer une transformation linéaire sur un signal numérique.

Une transformation linéaire est définie par un graphe dont les noeuds représentent des opérations d'addition ou de soustraction et les branches des opérations de multiplication par un coefficient déterminé. Selon l'invention, le circuit comprend un multiplieur pour chaque branche, ce multiplieur étant câblé selon la valeur du coefficient déterminé de ladite branche, et un additionneur pour chaque noeud, chaque additionneur étant câblé selon la nature de l'opération, addition ou soustraction, associée audit noeud.

Application à la compression et au codage des signaux numériques d'images en vue de leur transmission sur une ligne de transmission numérique.

EP 0 241 352 A1

## Description

### CIRCUIT POUR EFFECTUER UNE TRANSFORMATION LINEAIRE SUR UN SIGNAL NUMERIQUE

La présente invention a pour objet un circuit pour effectuer une transformation linéaire sur un signal numérique composé de N échantillons numériques, où N est un nombre entier. L'invention trouve notamment une application dans le traitement des signaux numériques, par exemple les signaux d'image ou de parole, en vue du codage de ces signaux avant leur émission sur une ligne de transmission.

Dans ces applications, on utilise différents types de transformation linéaire, tels que par exemple la transformée de Fourier discrète, la transformée en cosinus discrète, la transformé en sinus discrète, la transformée de Hadamard discrète, ou autres. Ces transformées sont dites "discrètes" par référence au caractère numérique du signal traité.

La transformation linéaire appliquée à un signal numérique de N échantillons est représentée classiquement par un graphe dans lequel les branches représentent une opération de multiplication et les noeuds une opération d'addition ou de soustraction.

De tels graphes sont décrits, pour une transformation en cosinus discrète, dans les documents suivants :
- demande de brevet français no85 15649 déposée le 22 octobre 1985,
- "A fast computational algorithm for the discrete cosine transform" de W.H. CHEN et al, IEEE Transactions on Communication, vol COM-25, no9, sept. 1977, pages 1004 à 1009,
- "A high FDCT processor for real-time processing of NTSC color TV signal" de A. JALALI et al, IEEE Transactions on Electromagnetic Compatibility, vol. EMC-24, no2, mai 1982, pages 278 à 286,
- brevet US-4 385 363.

La réalisation pratique d'un circuit fondé sur un graphe de transformation linéaire se heurte à deux problèmes principaux, qui sont, d'une part, le volume des calculs à réaliser et, d'autre part, un flot de données très compliquées entre les différents étages du graphe, à cause de la complexité de ce graphe.

De nombreux travaux ont déjà été réalisés sur la simplification des algorithmes de transformation, c'est-à-dire sur les graphes, par réduction du nombre d'opérations de multiplication, afin de diminuer le débit de données.

En effet, cette réduction est souhaitée, car les multiplieurs sont les éléments coûteux du circuit, aussi bien en ce qui concerne leur prix, que leur surface ou leur consommation. Le nombre de multiplieurs est donc réduit au maximum en affectant à chaque multiplieur les calculs de plusieurs branches du graphe, de façon à obtenir un taux d'utilisation maximal de chacun de ces multiplieurs.

On connaît deux types de circuit pour la réalisation d'une transformation linéaire, notamment une transformation en cosinus discrète ou une transformation de Fourier discrète.

Une première architecture connue consiste à utiliser un grand nombre de microprocesseurs de traitement de signal travaillant en parallèle. L'autre architecture connue consiste à utiliser des multiplieurs et des additionneurs standards reliés entre eux. Un tel circuit est décrit notamment dans le brevet US-4 385 363 déjà cité. Il s'agit, pour ces deux architectures, de réaliser un assemblage de circuits intégrés.

On a également déjà proposé de réaliser un circuit de transformation linéaire sous la forme d'un circuit intégré spécifique comprenant plusieurs multiplieurs travaillant en parallèle. Ces multiplieurs ne sont pas spécialisés, c'est-à-dire qu'ils peuvent multiplier entre eux deux nombres quelconques.

Les circuits de l'art antérieur présentent l'inconvénient de n'utiliser que des multiplieurs et des additionneurs standards, ce qui ne permet pas de prendre en compte les caractéristiques spécifiques du graphe de la transformation que l'on désire réaliser. Cet écart entre l'architecture des circuits de transformation linéaire et la structure de l'algorithme représenté par le graphe ne permet pas d'optimiser le traitement.

Le but de l'invention est de supprimer les inconvénients, notamment le faible rapport performance à prix, des circuits selon l'art antérieur. Ce but est atteint par un circuit pour la réalisation d'une transformation linéaire dont l'architecture est calquée sur celle du graphe de la transformation.

A l'encontre des circuits connus dans lesquels les multiplieurs et les additionneurs sont des circuits standards, pouvant multiplier ou additionner deux opérandes quelconques, on utilise dans le circuit de l'invention des multiplieurs et des additionneurs dédiés.

Plus précisément, à chaque branche du graphe de la transformation correspond un multiplieur spécifique, et de même à chaque noeud du graphe de la transformation correspond un additionneur spécifique. Ainsi, chaque multiplieur doit multiplier deux opérandes dont l'un est fixe et représente le poids de la branche du graphe associée. De même, chaque additionneur est conçu pour ne réaliser qu'une seule opération parmi l'addition ou la soustraction.

L'invention a donc pour objet un circuit pour effectuer une transformation linéaire sur un signal numérique composé de N échantillons, où N est un nombre entier, ledit circuit comprenant une suite d'étages réalisant des opérations d'addition et/ou de multiplication suivant un graphe de transformation linéaire déterminé, ledit graphe comprenant des branches représentant chacune une opération de multiplication entre un opérande variable et un coefficient déterminé, et des noeuds représentant chacun une addition ou une soustraction entre deux opérandes variables, ledit circuit étant caractérisé en ce qu'il comprend un multiplieur associé à chaque branche, ce multiplieur étant câblé selon la valeur du coefficient déterminé associé à la branche, et un additionneur pour chaque noeud, chaque additionneur étant câblé selon la nature de l'opération, addition ou soustraction, associée à ce noeud.

De manière préférée, le circuit de l'invention est réalisé sous la forme d'un circuit intégré unique.

Le circuit de l'invention présente notamment l'avantage, par rapport aux circuits connus, d'une puissance de calcul supérieure grâce au parallélisme entre son architecture et la structure du graphe de la transformation linéaire qu'il réalise. Ceci permet également, dans une version intégrée, d'optimiser le coût en diminuant la surface et le nombre de circuits utilisés, la puissance consommée et le coût du développement. La fiabilité du circuit s'en trouve par ailleurs accrue.

L'utilisation d'autant d'opérateurs que de noeuds et de branches du graphe permet d'obtenir dans le circuit un flot de données régulier et sans aiguillage. De plus, chaque multiplieur étant associé à une seule branche, un de ses opérandes est constant. Dans le cas d'une transformation en cosinus discrète, cette opérande constant est un cosinus ou un sinus. Le fait qu'un opérateur soit constant permet de spécialiser chaque multiplieur.

Les caractéristiques et avantages de l'invention ressortiront mieux de la description qui sa suivre, donnée à titre illustratif mais non limitatif, en référence aux dessins annexés, sur lesquels :

- les figures 1a, 1b et 1c illustrent un graphe d'une transformation en cosinus discrète de taille 16,

- les figures 2a, 2b et 2c illustrent un mode de réalisation d'un circuit selon l'invention pour la mise en oeuvre de la transformation représentée sur les figures 1a, 1b et 1c.

A titre d'exemple, on décrit un circuit réalisant la transformée en cosinus discrète en temps réel pour une image organisée en pavés de 16 × 16 pixels.

De manière connue, le débit de calcul est optimisé grâce à une structure de type "pipe line" et dans lequel le nombre d'opérations maximal que doit subir un échantillon de données est minimal. On minimise ainsi la quantité de mémorisations ou de regitres tampons utilisés.

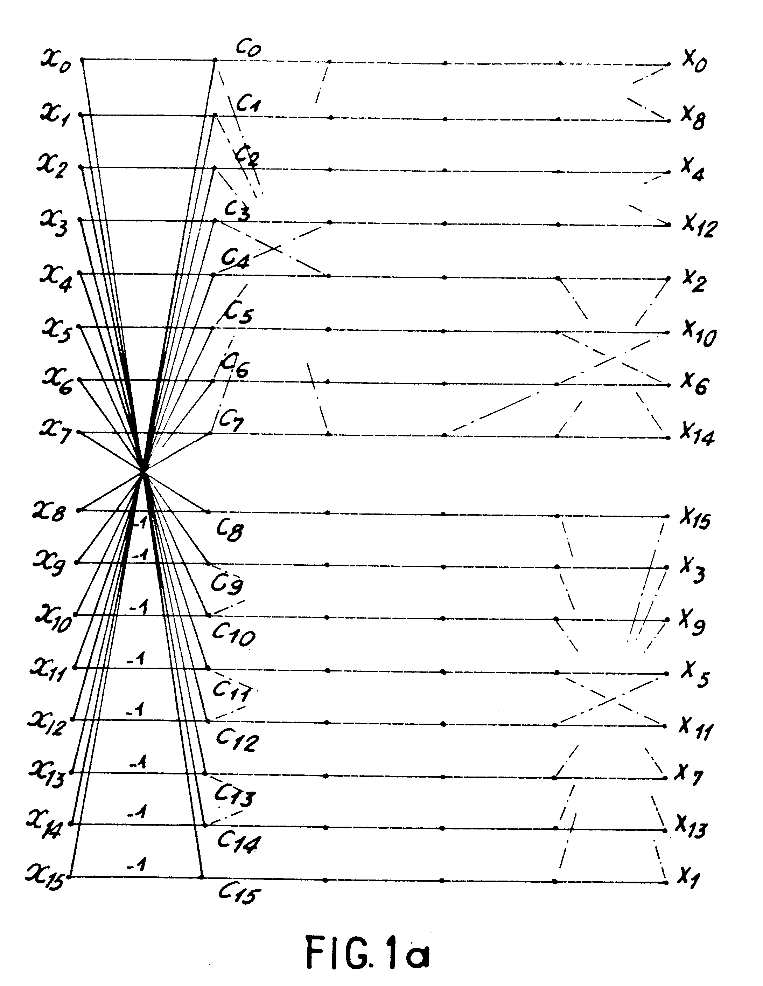

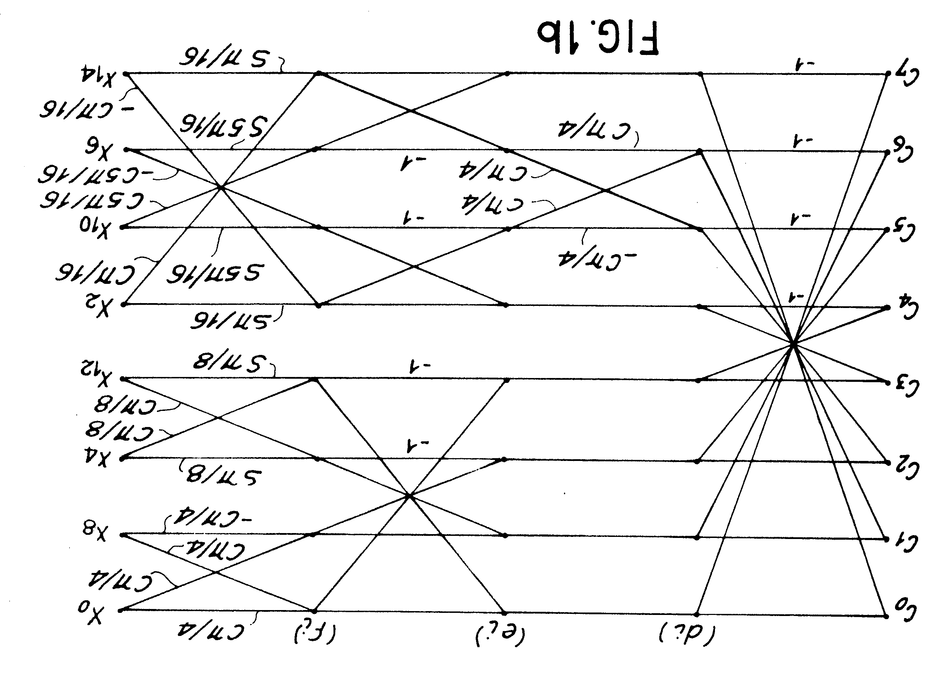

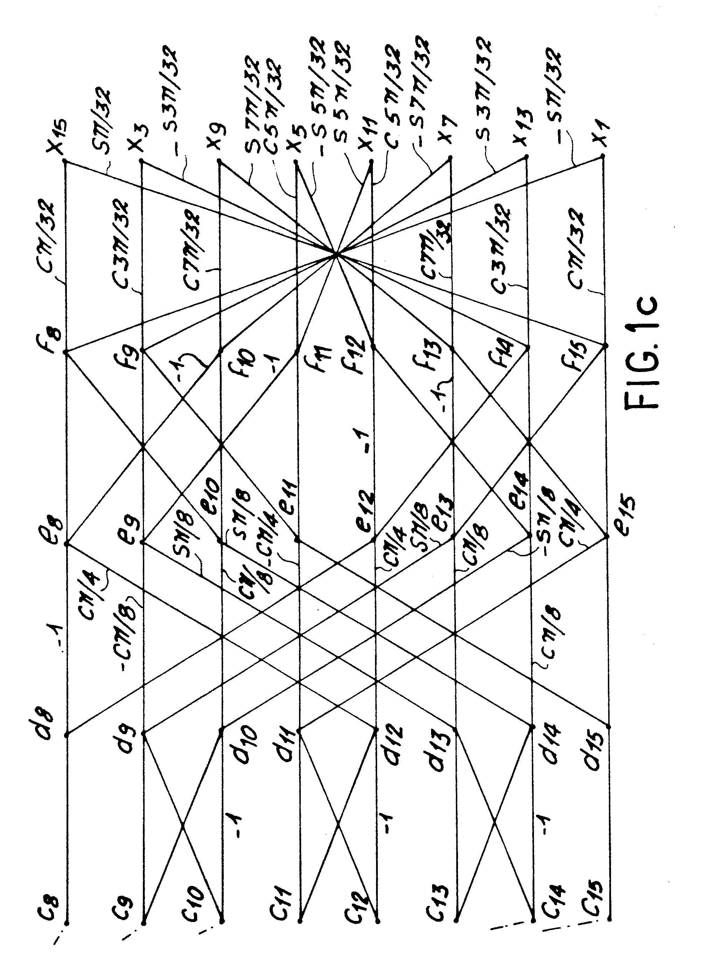

La demande de brevet français n° 85 15649, déjà citée, décrit le graphe de transformation en cosinus discrète pour la transformation d'une ligne ou d'une colonne de 16 pixels. Ce graphe est reproduit sur les figures 1a, 1b et 1c.

Le circuit de transformation en cosinus discrète d'un pavé de 16 × 16 pixels est réalisé sous la forme d'un seul circuit intégré comprenant dans l'ordre les modules suivants :

- un tableau de registre d'entrée réalisant la conversion de 16 pixels reçus en séquence et codés en parallèle, en 16 pixels délivrés bit à bit, en série,

- un opérateur de calcul de la transformation en cosinus discrète d'une ligne d'un pavé de 16 × 16 pixels,

- un tableau de registre de stockage et de transposition qui sert à mémoriser les coefficients de transformation en cosinus discrète ligne de tout le pavé avant d'attaquer les calculs de transformation en cosinus discrète colonne. Pour cela les différents coefficients qui arrivent ligne après ligne doivent être réarrangés par colonne. L'utilisation d'un tableau de registre avec décalage horizontal et vertical et de multiplexeurs d'entrée et de sortie permet de n'employer qu'un seul tableau de mémorisation,

- un opérateur de calcul de la transformation en cosinus discrète d'une colonne d'un pavé de 16 × 16 pixels,

- un tableau de registre de sortie qui réalise une conversion série-parallèle inverse de celle faite par le tableau de registre d'entrée.

Les opérateurs de calcul de la transformée en cosinus discrète d'une ligne ou d'une colonne sont chacun conforme au graphe représenté sur les figures 1a, 1b et 1c.

Dans ce graphe, chaque noeud représente une opération d'addition entre les branches qui aboutissent à ce noeud, et chaque branche représente une multiplication du nombre appliqué sur l'entrée de la branche par le coefficient associé à cette branche. Les coefficients notés $Ci\pi$ et $Si\pi$ correspondent respectivement à $\cos(i\pi)$ et $\sin(i\pi)$. On pourra se reporter à la demande de brevet français n° 85 15649 pour une description plus détaillée du graphe.

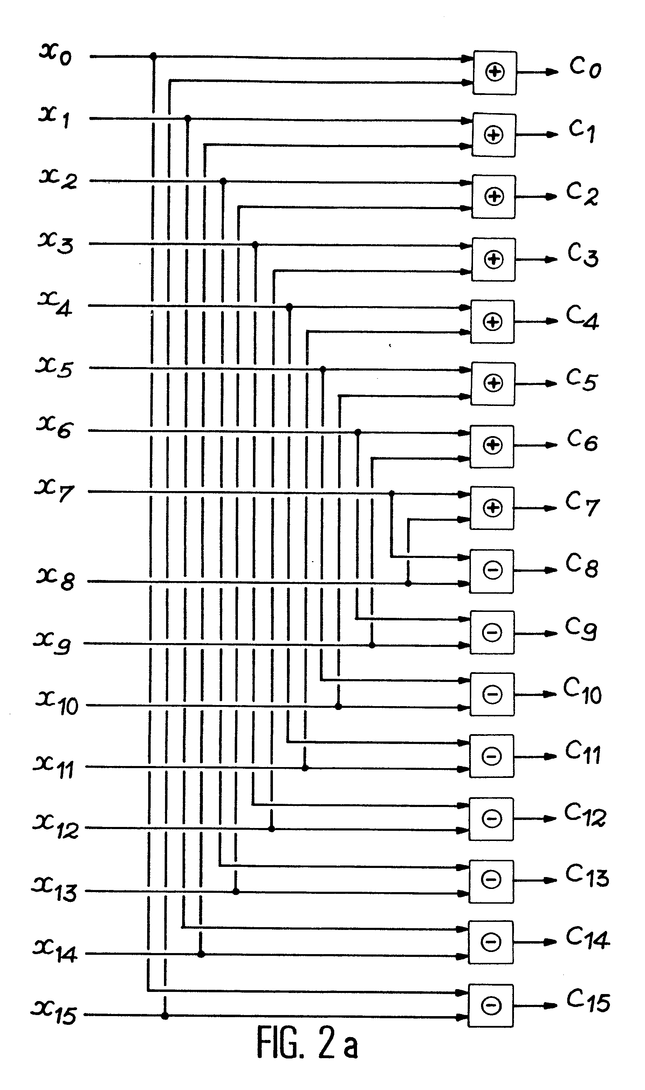

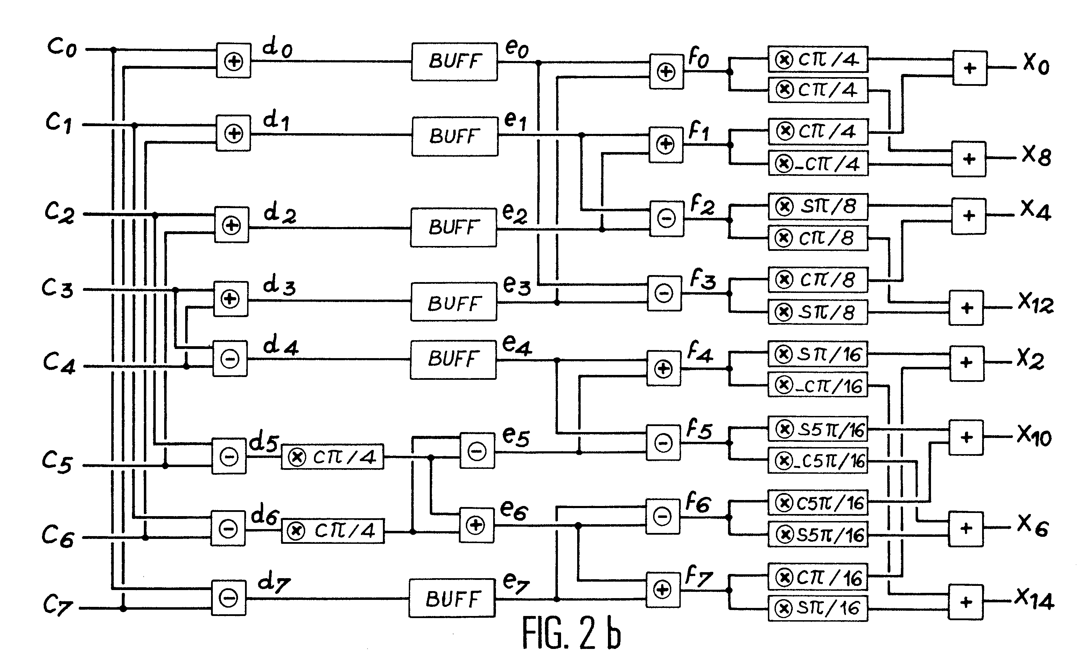

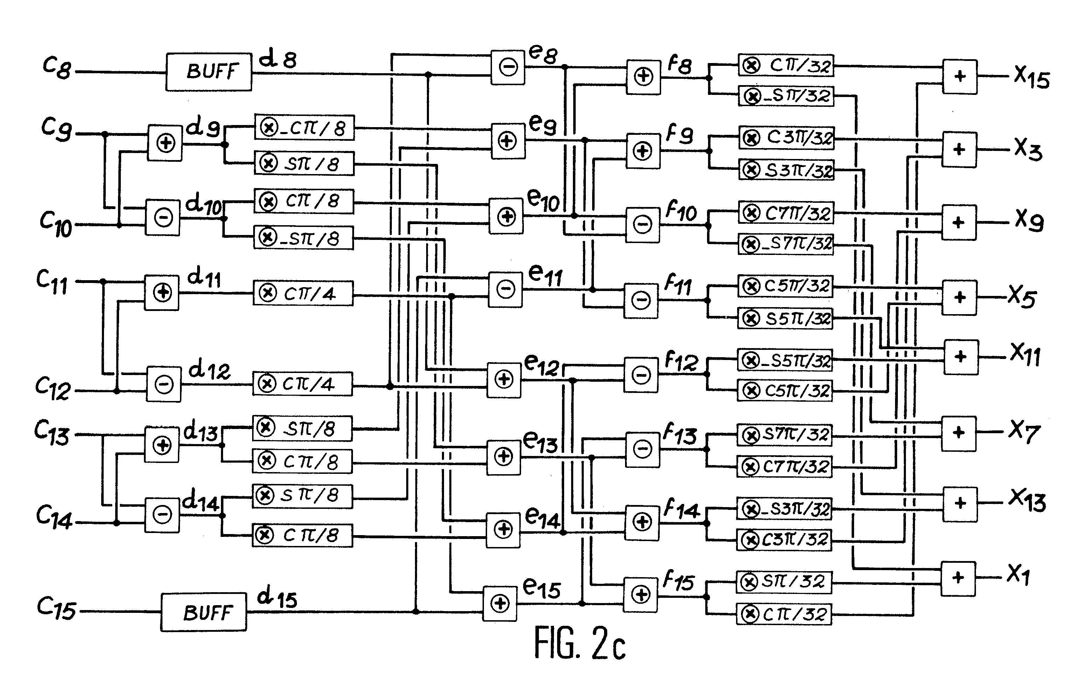

Un mode de réalisation selon l'invention d'un opérateur de calcul est représenté sur les figures 2a, 2b et 2c. Dans ce mode de réalisation, chaque opérateur comprend 44 multiplieurs du type parallèle-série et 72 additionneurs de type série. Pour chaque multiplieur, on a indiqué le coefficient multiplicatif appliqué à la donnée reçue en entrée. Pour chaque additionneur, on a précisé la nature de l'opération-addition ou soustraction- par les signs "+" et "-". Dans le cas d'une soustraction, on retranche l'opérande appliqué sur l'entrée inférieure du soustracteur de celui appliqué sur l'entrée supérieure.

Les multiplieurs parallèle-série travaillent avec des multiplicateurs codés en code complément à 2 et sont délivrés avec le bit le moins significatif (LSB) en tête. Pour chaque multiplieur, le multiplicande qui représente un coefficient en cosinus ou en sinus est positif et câblé dans un additionneur de type "Manchester Carry Chain" modifié, pour prendre en compte le fait que ce multiplicande est fixe.

Outre l'opérateur de calcul proprement dit, chaque multiplieur comprend un registre d'accumulation et de décalage, et un registre tampon pour délivrer à l'étage de calcul suivant dans le graphe les données bit à bit. Ce registre de type parallèle-série comprend de plus un inverseur permettant de fournir à l'étage suivant le résultat avec le signe adéquat.

Les additionneurs sont de type série et travaillent également sur des opérandes codés en code complément à 2. Chaque additionneur est câblé de manière à réaliser entre les deux opérandes l'opération souhaitée, addition ou soustraction.

Des registres tampon BUFF supplémentaires peuvent être utilisés pour conserver les informations qui sont inchangées entre deux noeuds.

Selon l'invention, un opérateur d'addition ou de multiplication est associé à chaque noeud ou chaque branche du graphe. En pratique, il est parfois possible de simplifier légèrement le circuit associé au graphe.

Par exemple, dans la figure 1b, deux branches associées au même coefficient multiplicatif cos($\pi$/4) partent du même noeud $d_6$. Il est bien sûr inutile de prévoir deux multiplieurs identiques pour un même noeud. Dans la figure 2b, on a donc prévu un seul multiplieur recevant le signal du noeud $d_6$, le résultat de la multiplication étant émis simultanément vers les additionneurs correspondant aux noeuds $e_5$ et $e_6$.

On a procédé de la même manière pour les branches issues du noeud $d_5$. Cependant dans ce cas, le coefficient multiplicatif est égal à $+$cos($\pi$/4) pour une branche et à -cos($\pi$/4) pour l'autre branche. Le multiplieur utilisé a un coefficient multiplicatif de cos($\pi$/4) ; le signe moins qui doit être ajouté pour la branche allant de $d_5$ à $e_5$ est restitué en remplaçant l'additioneur par un soustracteur en $e_5$.

On note d'ailleurs qu'il est possible de ne réaliser dans tout le circuit que des multiplieurs à coefficient de multiplication positif, le signe éventuel de ce coefficient étant pris en compte lors de l'opération d'addition/soustraction qui suit.

Le demandeur a réalisé un circuit intégré pour la transformée en cosinus discrète décrite ci-dessus. Ce circuit comporte 80 000 transistors sur une puce de 49 mm$^2$. Ce circuit est réalisé dans une technologie CMOS à 2 microns avec deux niveaux de métallisation. La transformée en cosinus discrète d'un pavé de 16 $\times$ 16 pixels, codés chacun sur 8 bits, est réalisée en temps réel à une fréquence de 16 Mégahertz et avec une précision interne des calculs sur 14 bits.

**Revendications**

1. Circuit pour effectuer une transformation linéaire sur un signal numérique composé de N échantillons, où N est un nombre entier, ledit circuit comprenant une suite d'étages réalisant chacun des opérations d'addition et/ou de multiplication suivant un graphe de transformation linéaire déterminé, ledit graphe comprenant des branches représentant chacune une opération de multiplication entre un opérande variable et un coefficient déterminé, et des noeuds représentant chacun une opération d'addition ou de soustraction entre deux opérandes varibles, ledit circuit étant caractérisé en ce qu'il comprend un multiplieur pour chaque branche, ledit multiplieur étant câblé selon la valeur du coefficient déterminé associé à ladite branche, et un additionneur pour chaque noeud, chaque additionneur étant câblé selon la nature de l'opération, addition ou soustraction, associée audit noeud.

2. Circuit selon la revendication 1, caractérisé en ce qu'il est réalisé sous la forme d'un circuit intégré.

3. Circuit selon l'une quelconque des revendications 1 et 2, caractérisé en ce qu'il comporte en outre, pour chaque branche du graphe représentant l'opération identité, un registre tampon pour mémoriser l'opérande variable transmis du noeud où ladite branche prend son origine vers le noeud où ladite branche aboutit.

0241352

FIG.1a

0241352

$c\pi/4$ $x_0$
$c\pi/4$
$x_8$
$c\pi/4$
$-c\pi/4$
$x_4$
$c\pi/8$
$c\pi/8$
$x_{12}$
$s\pi/8$
$s\pi/8$
$x_2$
$c\pi/16$
$s\pi/16$
$s5\pi/16$
$x_{10}$
$c5\pi/16$
$-c5\pi/16$
$x_6$
$s5\pi/16$
$-c\pi/16$
$x_{14}$
$s\pi/16$
$s\pi/16$

$(F_i)$

$(e_i)$

$(d_i)$

$-1$
$-1$

$-c\pi/4$
$c\pi/4$
$c\pi/4$
$-1$

$c\pi/4$
$c\pi/4$

$-1$
$-1$
$-1$
$-1$

$c_0$
$c_1$
$c_2$
$c_3$
$c_4$
$c_5$
$c_6$
$c_7$

FIG.1b

FIG. 1c

FIG. 2 a

FIG. 2 b

FIG. 2c

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 316 663 (NEC)<br>* Page 6, ligne 13 - page 7, ligne 31 *<br>--- | 1 | G 06 F 15/332 |
| A | US-A-4 080 661 (NEC)<br>* Colonne 5, ligne 40 - colonne 6, ligne 7 *<br>----- | 1 | |

**DOMAINES TECHNIQUES RECHERCHES (Int. Cl.4)**

G 06 F 15/332

Le présent rapport de recherche a été établi pour toutes les revendications

| Lieu de la recherche | Date d'achèvement de la recherche | Examinateur |
|---|---|---|
| LA HAYE | 30-06-1987 | BURGAUD C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82